# EUROPÄISCHE PATENTSCHRIFT

(11) **EP 2 296 923 B1**
(45) Veröffentlichungstag und Bekanntmachung des Hinweises auf die Patenterteilung: **23.10.2013**
(21) Anmeldenummer: 09780704.4
(22) Anmeldetag: 16.07.2009
(51) Int. Cl.: B60K 6/26, B60K 6/365, B60K 6/387, B60K 6/405, B60K 6/48

(54) **HYBRIDANTRIEBSSTRANG EINES KRAFTFAHRZEUGS**
HYBRID DRIVE TRAIN OF A MOTOR VEHICLE
CHAÎNE DE PROPULSION HYBRIDE D UN VÉHICULE AUTOMOBILE

(30) Priorität: 17.07.2008 DE 102008040498
(43) Veröffentlichungstag der Anmeldung: 23.03.2011
(73) Patentinhaber: ZF Friedrichshafen AG, 88038 Friedrichshafen (DE)
(72) Erfinder: BUDACH, Rene, 88212 Ravensburg (DE); BACHMANN, Max, 88339 Bad Waldsee (DE); HUNOLD, Bernard, 88046 Friedrichshafen (DE); BORNTRAEGER, Kai, 88085 Langenargen (DE)
(86) Internationale Anmeldenummer: PCT/EP2009/059146
(87) Internationale Veröffentlichungsnummer: WO 2010/007126

(56) Entgegenhaltungen:
- EP-A1- 0 769 404
- EP-A1- 1 038 722
- EP-A2- 0 773 127
- WO-A1-03/035420
- DE-A1- 10 012 221
- DE-A1- 10 346 640
- DE-A1- 19 923 316
- DE-A1-102004 043 589
- US-B1- 6 474 428

## Beschreibung

Die Erfindung betrifft einen Hybridantriebsstrang eines Kraftfahrzeugs, der einen Verbrennungsmotor mit einer Triebwelle, eine als Motor und als Generator betreibbare Elektromaschine mit einem Stator sowie einem Rotor und ein mehrstufiges Planeten-Automatgetriebe mit einer Eingangswelle und einer Ausgangswelle umfasst, wobei die Triebwelle des Verbrennungsmotors über eine steuerbare Trennkupplung und der Rotor der Elektromaschine über eine Eingangsgetriebestufe mit der Eingangswelle des Automatgetriebes in Triebverbindung stehen.

Das US-Patent Nr. 6,474,428 B1 offenbart einen Hybridantriebsstrang nach dem Oberbegriff der Patentansprüche 1 und 2.

Ein Hybridantriebsstrang eines Kraftfahrzeugs mit einer parallel wirksamen Anordnung eines Verbrennungsmotors und einer Elektromaschine kann in Verbindung mit einem antriebstechnisch nachgeordneten mehrstufigen Schaltgetriebe bekanntlich geometrisch einfach derart aufgebaut sein, dass die Elektromaschine koaxial auf der Eingangswelle des Schaltgetriebes angeordnet ist, der Rotor der Elektromaschine drehfest mit der Eingangswelle des Schaltgetriebes verbunden ist, und die Triebwelle des Verbrennungsmotors über eine steuerbare, also aus- und einrückbare Trennkupplung mit der Eingangswelle des Schaltgetriebes verbindbar ist. Die Elektromaschine kann in diesem Fall während des Fahrbetriebs wahlweise kraftlos geschaltet werden, als Generator zum Laden eines elektrischen Energiespeichers verwendet werden, oder als Elektromotor zum Antrieb des Kraftfahrzeugs eingesetzt werden. Im Motorbetrieb kann die Elektromaschine bei geschlossener Trennkupplung, insbesondere bei einer starken Beschleunigung und beim Befahren einer steilen Steigungsstrecke zur Unterstützung des Verbrennungsmotors im sogenannten Boostbetrieb, und bei geöffneter Trennkupplung, insbesondere beim Anfahren und beim Befahren von Innenstadtbereichen mit Emissionsbeschränkungen, als alleiniger Antriebsmotor im reinen Elektrobetrieb eingesetzt werden.

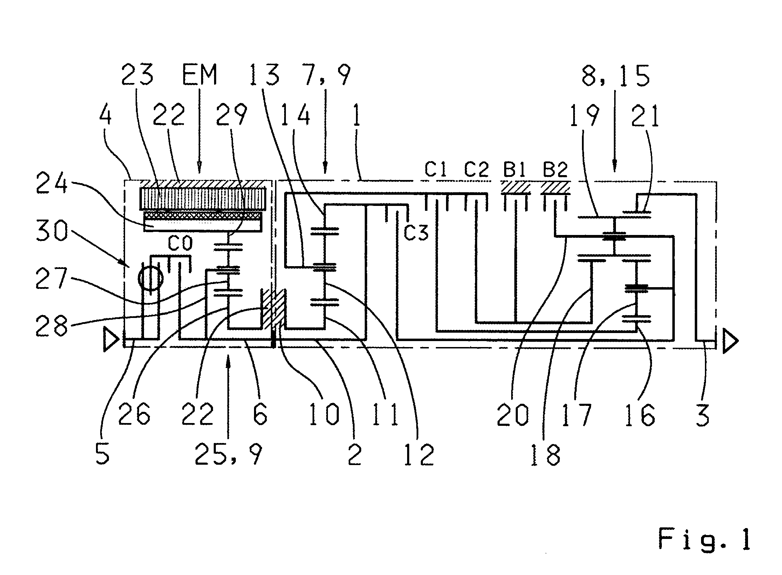

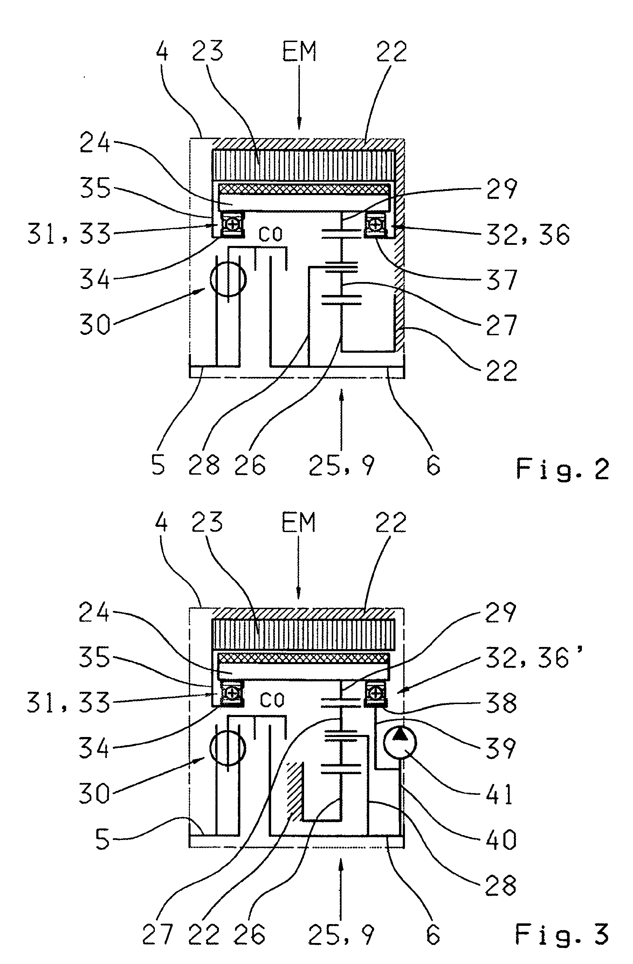

Ein derartiger Hybridantriebsstrang mit einem als Planeten-Automatgetriebe ausgebildeten Schaltgetriebe ist beispielsweise in zwei Ausführungsformen aus der DE 103 46 640 A1 bekannt. In beiden Varianten dieses bekannten Hybridantriebsstrangs nach den dortigen Figuren 1 und 2 ist jeweils eine wahlweise als Motor und als Generator betreibbare Elektromaschine koaxial über der Eingangswelle des Automatgetriebes angeordnet, und der Rotor der Elektromaschine ist jeweils unmittelbar drehfest mit der Eingangswelle des Automatgetriebes verbunden. Die mit einem Drehschwingungsdämpfer versehene Triebwelle des Verbrennungsmotors ist jeweils über eine steuerbare Trennkupplung mit der Eingangswelle des Automatgetriebes verbindbar. Zudem steht ein Abtriebselement einer zur Druck- und Kühlölversorgung der Schaltelemente des Automatgetriebes vorgesehenen Hydraulikpumpe mit der Eingangswelle des Automatgetriebes in Triebverbindung.

Ein weiterer derartiger Hybridantriebsstrang mit einem als Planeten-Automatgetriebe ausgebildeten Schaltgetriebe ist in verschiedenen Ausführungsformen in der DE 10 2004 043 589 A1 beschrieben. Während eine erste Variante dieses bekannten Hybridantriebsstrangs nach der dortigen Fig. 1 der zweiten Ausführung des Hybridantriebsstrangs nach der DE 103 46 640 A1 gemäß der dortigen Fig. 2 weitgehend entspricht, weist eine zweite Variante des aus der DE 10 2004 043 589 A1 bekannten Hybridantriebsstrangs nach der dortigen Fig. 2 eine zusätzliche zweite Elektromaschine auf, deren Rotor permanent mit einem Abtriebselement einer zur Druck- und Kühlölversorgung der Schaltelemente des Automatgetriebes vorgesehenen Hydraulikpumpe in Triebverbindung steht und über eine zusätzliche zweite Trennkupplung mit der Triebwelle des Verbrennungsmotors verbindbar ist. Die zweite Elektromaschine ist leistungsschwächer als die erste Elektromaschine ausgebildet und primär als Starter zum Anlassen des Verbrennungsmotors und als Pumpenantrieb zum Antrieb der Hydraulikpumpe bei stehendem Verbrennungsmotor vorgesehen. Mit zwei Elektromaschinen und zwei Trennkupplungen ist der apparative und steuerungstechnische Aufwand bei dieser zweiten Ausführungsform des bekannten Hybridantriebsstrangs allerdings ungünstig hoch.

Generell ist bei den vorgenannten Hybridantriebssträngen von Nachteil, dass das Drehzahlniveau der mit der Eingangswelle verbundenen Elektromaschine jeweils demjenigen des Verbrennungsmotors entspricht, und dass die betreffende Elektromaschine deshalb zur Erzielung einer für einen reinen Elektrobetrieb ausreichenden Antriebsleistung relativ groß und schwer ausgebildet sein muss.

In Verbindung mit einer achsparallelen Anordnung der betreffenden Elektromaschine und einer Triebverbindung des Rotors der Elektromaschine mit der Eingangswelle des Schaltgetriebes über eine Eingangsgetriebestufe mit einer Übersetzung i_{EK} » 1, wie ein Stirnzahnradpaar oder ein Umschlingungsgetriebe, kann die Elektromaschine jedoch deutlich leistungsschwächer und entsprechend klein und leicht ausgebildet werden.

Ein entsprechender Hybridantriebsstrang ist beispielsweise in zwei Ausführungen aus der DE 100 12 221 A1 bekannt. In beiden Ausführungsformen dieses bekannten Hybridantriebsstrangs nach den dortigen Figuren 1 und 2 ist jeweils eine wahlweise als Motor und als Generator betreibbare erste Elektromaschine achsparallel zu der Eingangswelle eines Hauptgetriebes angeordnet, das unter anderem auch als ein Planeten-Automatgetriebe ausgebildet sein kann. Der Rotor der ersten Elektromaschine steht über eine als Stirnzahnradpaar ausgebildete Eingangsgetriebestufe mit hoher Übersetzung (i_{EK} » 1) mit der Eingangswelle des Hauptgetriebes in Triebverbindung.

Bei diesem bekannten Hybridantriebsstrang sind jedoch insbesondere die radialen Abmessungen im Bereich der Elektromaschine und der Eingangsgetriebestufe derart groß, dass dieser Hybridantriebsstrang ohne größere Änderungen an der Fahrzeugkarosserie nicht in ein Kraftfahrzeug integrierbar ist. Des Weiteren können die durch die Übersetzung der Eingangsgetriebestufe bedingten Drehzahlen des Rotors der Elektromaschine derart hoch sein, dass ein ungünstig hoher Aufwand für die drehzahlfeste Gestaltung sowie die Auswuchtung und Lagerung des Rotors erforderlich ist.

Es besteht somit ein Bedarf für einen Hybridantriebsstrang eines Kraftfahrzeugs, der unter Verwendung einer für den reinen Elektrobetrieb ausreichenden Elektromaschine ohne Änderungen an der Fahrzeugkarosserie alternativ zu einem konventionellen Antriebsstrang, der ein Automatgetriebe und einen diesem vorgeschalteten hydrodynamischen Drehmomentwandler umfasst, in ein Kraftfahrzeug integrierbar ist.

Demzufolge liegt der vorliegenden Erfindung die Aufgabe zugrunde, einen Hybridantriebsstrang der eingangs genannten Art vorzuschlagen, der bei möglichst einfachem und Platz sparendem Aufbau ohne Funktionseinschränkungen die Abmessungen eines konventionellen Antriebsstrangs mit hydrodynamischen Drehmomentwandler einhält. Des Weiteren soll eine geeignete Lagerung des Rotors der verwendeten Elektromaschine angegeben werden.

Zur Lösung der gestellten Aufgabe geht die Erfindung aus von einem Hybridantriebsstrang eines Kraftfahrzeugs, der einen Verbrennungsmotor mit einer Triebwelle, eine als Motor und als Generator betreibbare Elektromaschine mit einem Stator sowie einem Rotor, und ein mehrstufiges Planeten-Automatgetriebe mit einer Eingangswelle und einer Ausgangswelle umfasst, wobei die Triebwelle des Verbrennungsmotors über eine steuerbare Trennkupplung und der Rotor der Elektromaschine über eine Eingangsgetriebestufe mit der Eingangswelle des Automatgetriebes in Triebverbindung stehen. Zudem ist gemäß der Erfindung vorgesehen, dass die Elektromaschine, die Trennkupplung und die Eingangsgetriebestufe in koaxialer Anordnung in einem vormontierbaren Hybridmodul mit einem Modulgehäuse, einem Eingangselement und einem Ausgangselement zusammengefasst sind, wobei das Eingangselement dreh-fest mit der Triebwelle des Verbrennungsmotors und das Ausgangselement drehfest mit der Eingangswelle des Automatgetriebes verbunden sind, und das Hybridmodul die Abmessungen eines konventionell verwendeten hydrodynamischen Drehmomentwandlers einhält.

Vorteilhafte Ausgestaltungen und Weiterbildungen des erfindungsgemäßen Hybridantriebsstrangs sind Gegenstand der Ansprüche 3 bis 12.

Die Erfindung besteht demnach im Wesentlichen in einem eine bauliche Einheit bildenden Hybridmodul, das die Elektromaschine, die Trennkupplung und die Eingangsgetriebestufe enthält, wobei aufgrund der koaxialen Anordnung dieser Baugruppen eine besonders kompakte Bauform erreicht wird, mit der die Abmessungen eines in einem vorhandenen konventionellen Antriebsstrang zu ersetzenden hydrodynamischen Drehmomentwandlers ohne Funktionseinschränkungen eingehalten werden können.

Das Eingangselement des Hybridmoduls ist analog zu der Pumpenradwelle eines Drehmomentwandlers zweckmäßig als eine Welle oder Flanschwelle ausgebildet, die bei der Montage des Hybridantriebsstrangs z.B. über eine Steckverbindung bzw. eine Flanschverschraubung drehfest mit der Kurbelwelle des Verbrennungsmotors oder einer mit dieser verbundenen Schwungscheibe verbindbar ist. Analog zu der Turbinenradnabe eines Drehmomentwandlers ist es ebenso zweckmäßig, wenn das Ausgangselement des Hybridmoduls als eine Nabe ausgebildet ist, die bei der Montage des Hybridantriebsstrangs z.B. über eine Steckverzahnung drehfest mit der axial hervorstehenden Eingangswelle des Automatgetriebes verbindbar ist.

Der erfindungsgemäße Hybridantriebsstrang unterscheidet sich somit, abgesehen von einem größeren Energiespeicher für die Elektromaschine, der an anderer Stelle innerhalb des Kraftfahrzeugs, beispielsweise unter der Rücksitzbank oder im Kofferraum, angeordnet werden kann, von einem konventionellen Antriebsstrang nur durch das anstelle des hydrodynamischen Drehmomentwandlers vorgesehene Hybridmodul. Das Planeten-Automatgetriebe des konventionellen Antriebsstrangs kann in dem erfindungsgemäßen Hybridantriebsstrang unverändert beibehalten werden, wodurch im Gegensatz zu bekannten Hybridantriebssträngen eine hohe Anzahl von Gangstufen und eine hohe Spreizung verfügbar sind. Zudem ergeben sich durch die insgesamt höhere Produktionsstückzahl des gemeinsamen Automatgetriebes deutliche Kostenvorteile gegenüber bekannten Lösungen mit spezifischen Getriebeausführungen. Vorteilhaft sind für die Integration des erfindungsgemäßen Hybridantriebsstrangs in ein Kraftfahrzeug auch keine Änderungen an der Fahrzeugkarosserie erforderlich.

Zur Erzielung kompakter Abmessungen des Hybridmoduls ist bevorzugt vorgesehen, dass die Elektromaschine als ein Innenläufer mit einem radial innerhalb des Stators angeordneten Rotor ausgebildet ist, und dass die Trennkupplung axial motorseitig und die Eingangsgetriebestufe axial getriebeseitig radial innerhalb des Rotors angeordnet sind.

Um die unvermeidlichen Drehschwingungen der die Triebwelle eines Hubkolbenmotors bildenden Kurbelwelle wirksam abzuschwächen, kann das Eingangselement des Hybridmoduls auch aus zwei begrenzt zueinander verdrehbaren Teilen bestehen, die über einen Drehschwingungsdämpfer miteinander verbunden sind. Der Drehschwingungsdämpfer ist somit ebenfalls ein Bestandteil des Hybridmoduls und kann axial motorseitig entweder radial innerhalb oder zumindest nahe des Rotors der Elektromaschine angeordnet sein.

Um einerseits eine kompakte Bauweise und andererseits einen möglichst hohen Wirkungsgrad der Elektromaschine zu erreichen, weist die Eingangsgetriebestufe zweckmäßig eine Übersetzung i_{EK} zwischen 1,2 und 1,7 auf (1,2 < i_{EK} < 1,7).

Eine derartige Übersetzung i_{EK} ist in Verbindung mit kompakten Abmessungen dadurch erzielbar, dass die Eingangsgetriebestufe als ein einfacher Planetenradsatz mit einem Sonnenrad, mehreren auf einem Planetenträger umfangsseitig verteilt angeordneten und drehbar gelagerten sowie mit dem Sonnenrad in Verzahnungseingriff stehenden Planetenrädern, und einem mit den Planetenrädern in Verzahnungseingriff stehenden Hohlrad ausgebildet ist, wobei das Sonnenrad gegenüber dem Modulgehäuse arretiert ist, das Hohlrad drehfest mit dem Rotor der Elektromaschine verbunden ist, und der Planetenträger drehfest mit dem Ausgangselement des Hybridmoduls verbunden ist.

Die Übersetzung i_{EK} der Eingangsgetriebestufe liegt in diesem Fall, abhängig von den jeweiligen Zähnezahlen, exakt zwischen 1,25 und 1,67 (1,25 < i_{EK} < 1,67). Bei dieser Bauart der Eingangsgetriebestufe ergeben sich vorteilhaft auch relativ geringe Relativdrehzahlen zwischen den rotierenden Bauteilen, wie zwischen dem Sonnenrad und dem Planetenträger und zwischen dem Planetenträger und dem Hohlrad, wodurch sich ein insgesamt hoher Übertragungswirkungsgrad ergibt.

Der Rotor der Elektromaschine ist gemäß einem Aspekt der Erfindung auf einfache und Platz sparende Weise über eine zweischnittige Lagerung, bestehend aus einer axial motorseitig der Eingangsgetriebestufe angeordneten Festlagerung und einer axial getriebeseitig der Eingangsgetriebestufe angeordneten Loslagerung, gegenüber dem Modulgehäuse und/oder einem in dem Modulgehäuse drehbar gelagerten Bauteil drehbar gelagert.

Die Festlagerung des Rotors der Elektromaschine, ist erfindungsgemäß durch ein Wälzlager gebildet, das sich radial innen auf einem gehäusefesten außenzylindrischen Lagersitz abstützt, der z.B. Bestandteil eines gehäusefesten Lagerschildes sein kann.

Die Loslagerung des Rotors kann jedoch auch durch ein Wälzlager gebildet sein, das sich radial innen auf einem außenzylindrischen Lagersitz abstützt, der an einem mit dem Ausgangselement des Hybridmoduls drehfest verbundenen Bauteil, wie einem Abtriebselement einer von dem Ausgangselement antreibbaren Hydraulikpumpe, befestigt ist. Die auftretenden Radialkräfte der Loslagerung werden in diesem Fall über die Lagerung des Ausgangselementes des Hybridmoduls in das Modulgehäuse übertragen.

Das für die Festlagerung und/oder die Loslagerung des Rotors verwendete Wälzlager ist bevorzugt jeweils als Rillenkugellager ausgebildet. Ein standardisiertes Rillenkugellager ist robust sowie preiswert und kann aufgrund seiner bauartbedingten Belastungsrichtungen sowohl als Loslager als auch als Festlager eingesetzt werden.

Besonders vorteilhaft kann die Loslagerung des Rotors der Elektromaschine aber auch durch die Verzahnungen und die Lagerungen der Bauteile der Eingangsgetriebestufe gebildet sein, wodurch der Bauraum und die Kosten für ein separates Wälzlager eingespart werden können. Bei der bevorzugten Ausbildung der Eingangsgetriebestufe als einfacher Planetenradsatz werden die auftretenden Radialkräfte der Loslagerung von dem Rotor der Elektromaschine weitgehend über die Verzahnungen des Hohlrades und der Planetenräder in den Planetenträger und von diesem über die Lagerung des Ausgangselementes des Hybridmoduls in das Modulgehäuse übertragen.

Alternativ zu einer zweischnittigen Lagerung ist gemäß einem zweiten Aspekt der Erfindung der Rotor der Elektromaschine jedoch auch über eine einzige, axial motorseitig der Eingangsgetriebestufe angeordnete Festlagerung gegenüber dem Modulgehäuse oder einem in dem Modulgehäuse drehbar gelagerten Bauteil drehbar gelagert. Von der Eingangsgetriebestufe bzw. dem Hohlrad des Planetenradsatzes ausgehende Axialspannungen werden bei dieser Lagerung durch eine Axialverschiebung des Hohlrades und gegebenenfalls der Planetenräder gegenüber dem

Planetenträger und/oder durch eine elastische Verformung des Rotors der Elektromaschine ausgeglichen.

Die Festlagerung des Rotors ist erfindungsgemäß durch eine Wälzlageranordnung gebildet, die sich radial innen auf einem gehäusefesten außenzylindrischen Lagersitz abstützt.

Um neben den üblichen Radial- und Axialkräften auch betriebsbedingt auftretende Kipp- und Biegemomente des Rotors aufnehmen zu können, ist die Festlagerung des Rotors in diesem Fall bevorzugt als ein zweireihiges Schrägkugellager oder als eine angestellte Lagerung von zwei Kegelrollenlagern ausgebildet.

Zur Verdeutlichung der Erfindung ist der Beschreibung eine Zeichnung mit Ausführungsbeispielen beigefügt. In dieser zeigt
Fig. 1 eine schematische Darstellung eines erfindungsgemäßen Hybridantriebsstrang mit einem Hybridmodul,
Fig. 2 das Hybridmodul nach Fig. 1 mit einer ersten Lagerung des Rotors einer Elektromaschine,
Fig. 3 das Hybridmodul nach Fig. 1 mit einer zweiten Lagerung des Rotors der Elektromaschine,
Fig. 4 das Hybridmodul nach Fig. 1 mit einer dritten Lagerung des Rotors der Elektromaschine,
Fig. 5 das Hybridmodul nach Fig. 1 mit einer vierten Lagerung des Rotors der Elektromaschine, und
Fig. 6 das Hybridmodul nach Fig. 1 mit einer fünften Lagerung des Rotors der Elektromaschine.

Ein erfindungsgemäßer Antriebsstrang nach Fig. 1 weist ein Planeten-Automatgetriebe 1 mit einer Eingangswelle 2 sowie einer Ausgangswelle 3 und ein diesem anstelle eines hydrodynamischen Drehmomentwandlers vorgeschaltetes Hybridmodul 4 mit einem Eingangselement 5 und einem Ausgangselement 6 auf.

Das Automatgetriebe 1 besteht aus einem eingangsseitigen Teilgetriebe 7 und einem ausgangsseitigen Teilgetriebe 8, die zwischen der Eingangswelle 2 sowie der Ausgangswelle 3 angeordnet und durch ein selektives Schließen von drei Schaltkupplungen C1, C2, C3 und zwei Schaltbremsen B1, B2 schaltbar sind.

Das eingangsseitige Teilgetriebe 7 ist als ein einfacher Planetenradsatz 9 mit einem Sonnenrad 11, das permanent gegenüber einem Getriebegehäuse 10 festgelegt ist, mit einer Gruppe von Planetenrädern 12, die mit dem Sonnenrad 11 in Verzahnungseingriff stehen und auf einem gemeinsamen Planetenträger 13 drehbar gelagert sind, und mit einem Hohlrad 14, das mit den Planetenrädern 12 kämmt und permanent drehfest mit der Eingangswelle 2 verbunden ist, ausgebildet.

Das ausgangsseitige Teilgetriebe 8 ist als ein Ravigneaux-Radsatz 15 ausgebildet, mit einem ersten, radial kleineren Sonnenrad 16, das mit einer ersten Gruppe axial kurzer Planetenräder 17 kämmt, mit einem zweiten, radial größeren Sonnenrad 18, das mit einer zweiten Gruppe axial langer Planetenräder 19 kämmt, die jeweils mit einem der axial kurzen Planetenräder 17 in Verzahnungseingriff stehen, mit einem Planetenträger 20, auf dem die axial kurzen Planetenräder 17 und die axial langen Planetenräder 19 drehbar gelagert sind, und mit einem Hohlrad 21, das mit den axial langen Planetenrädern 19 kämmt und permanent drehfest mit der Ausgangswelle 3 verbunden ist.

Das radial kleinere Sonnenrad 16 ist mittels der ersten Schaltkupplung C1 selektiv mit dem Planetenträger 13 des eingangsseitigen Teilgetriebes 7 verbindbar. Das radial größere Sonnenrad 18 ist mittels der zweiten Schaltkupplung C2 selektiv mit dem Planetenträger 13 des eingangsseitigen Teilgetriebes 7 verbindbar. Der ausgangsseitige Planetenträger 20 ist mittels der dritten Schaltkupplung C3 selektiv mit der Eingangswelle 2 verbindbar. Das radial größere Sonnenrad 18 ist mittels der ersten Schaltbremse B1 selektiv gegenüber dem Getriebegehäuse 10 arretierbar. Schließlich ist der Planetenträger 20 mittels der zweiten Schaltbremse B2 selektiv gegenüber dem Getriebegehäuse 10 arretierbar.

Dieses bekannte Automatgetriebe weist sechs Vorwärts-Gangstufen G1 bis G6 und eine Rückwärts-Gangstufe R auf, die jeweils durch das selektive Schließen von zwei Schaltelementen, also zwei der Schaltkupplungen C1, C2, C3 und der Schaltbremsen B1, B2, schaltbar sind.

Das Hybridmodul 4 umfasst eine als Motor und als Generator betreibbare Elektromaschine EM sowie eine steuerbare, d.h. ein- und ausrückbare Trennkupplung C0 zur bedarfsweisen Zu- und Abschaltung eines mit dem Eingangselement 5 in Triebverbindung stehenden Verbrennungsmotors. Die Elektromaschine EM ist als ein Innenläufer mit einem radial außenliegenden und an einem Modulgehäuse 22 befestigten Stator 23 sowie mit einem radial innerhalb des Stators 23 angeordneten Rotor 24 ausgebildet.

Der Rotor 24 steht über eine Eingangsgetriebestufe 25 mit dem Ausgangselement 6 in Triebverbindung. Die Eingangsgetriebestufe 25 ist als ein einfacher Planetenradsatz 9 ausgebildet und axial getriebeseitig koaxial innerhalb des von dem Rotor 24 gebildeten Hohlraums der Elektromaschine EM angeordnet. Die Eingangsgetriebestufe 25 umfasst ein Sonnenrad 26, das permanent an dem Modulgehäuse 22 festgelegt ist, eine Gruppe von Planetenrädern 27, die mit dem Sonnenrad 26 in Verzahnungseingriff stehen und auf einem gemeinsamen Planetenträger 28 drehbar gelagert sind, und ein Hohlrad 29, das mit den Planetenrädern 27 kämmt und permanent drehfest mit dem Rotor 24 der Elektromaschine EM verbunden ist. Die Eingangsgetriebestufe 25 weist somit eine Übersetzung i_{EK} auf, die zwischen 1,25 und 1,67 liegt (1,25 < i_{EK} < 1,67).

Die Trennkupplung C0, die eingangsseitig über einen Drehschwingungsdämpfer 30 mit dem drehfest mit der Triebwelle des nicht abgebildeten Verbrennungsmotors verbundenen Eingangselement 5 und ausgangsseitig unmittelbar mit dem Ausgangselement 6 des Hybridmoduls 4 in Verbindung steht, ist axial motorseitig koaxial innerhalb des Rotors 24 der Elektromaschine EM angeordnet.

Aufgrund der Ausbildung und Anordnung der Elektromaschine EM, der Trennkupplung C0 und der Eingangsgetriebestufe 25 hält das Hybridmodul 4 ohne Funktionseinschränkungen die Abmessungen eines hydrodynamischen Drehmomentwandlers eines konventionellen Antriebsstrangs ein. Der erfindungsgemäße Hybridantriebsstrang nach Fig. 1 ist somit ohne weiteres alternativ zu einem konventionellen Antriebsstrang in ein Kraftfahrzeug integrierbar und kann gegebenenfalls zusammen mit diesem in einer gemeinsamen Fertigungslinie montiert werden.

In den Figuren 2 bis 6 sind jeweils in einem vergrößerten Ausschnitt des in Fig. 1 nur schematisch und daher stark vereinfacht dargestellten Hybridmoduls 4 beispielhaft verschiedene Lagerungen des Rotors 24 der Elektromaschine EM abgebildet.

In der Ausführungsform des Hybridmoduls 4 nach Fig. 2 ist der Rotor 24 der Elektromaschine EM über eine zweischnittige Lagerung, bestehend aus einer axial motorseitig der Eingangsgetriebestufe 25 angeordneten Festlagerung 31 und einer axial getriebeseitig der Eingangsgetriebestufe 25 angeordneten Loslagerung 32 gegenüber dem Modulgehäuse 22 drehbar gelagert. Die Festlagerung 31 des Rotors 24 wird durch ein als Rillenkugellager ausgebildetes Wälzlager 33 gebildet, das sich radial innen auf einem außenzylindrischen Lagersitz 34 abstützt, der Bestandteil eines gehäusefesten Lagerschildes 35 ist. Die Loslagerung 32 des Rotors 24 wird durch ein als Rillenkugellager ausgebildetes Wälzlager 36 gebildet, das sich radial innen auf einem unmittelbar mit dem Modulgehäuse 22 verbundenen außenzylindrischen Lagersitz 37 abstützt.

In der Variante des Hybridmoduls 4 nach Fig. 3 ist der Rotor 24 der Elektromaschine EM ebenfalls über eine zweischnittige Lagerung, bestehend aus einer axial motorseitig der Eingangsgetriebestufe 25 angeordneten Festlagerung 31 und einer axial getriebeseitig der Eingangsgetriebestufe 25 angeordneten Loslagerung 32 gelagert. Im Unterschied zu der zuvor beschriebenen Ausführungsform nach Fig. 2 ist die Loslagerung 32 des Rotors 24 nunmehr durch ein als Rillenkugellager ausgebildetes Wälzlager 36' gebildet, das sich radial innen auf einem außenzylindrischen Lagersitz 38 abstützt, der über eine Lagerscheibe 39 an einem mit dem Ausgangselement 6 des Hybridmoduls 4 drehfest verbundenen Abtriebselement 40 einer Hydraulikpumpe 41 befestigt ist. Die auftretenden Radialkräfte der Loslagerung 32 werden in diesem Fall über die Lagerung des Ausgangselementes 6 in das Modulgehäuse 22 übertragen.

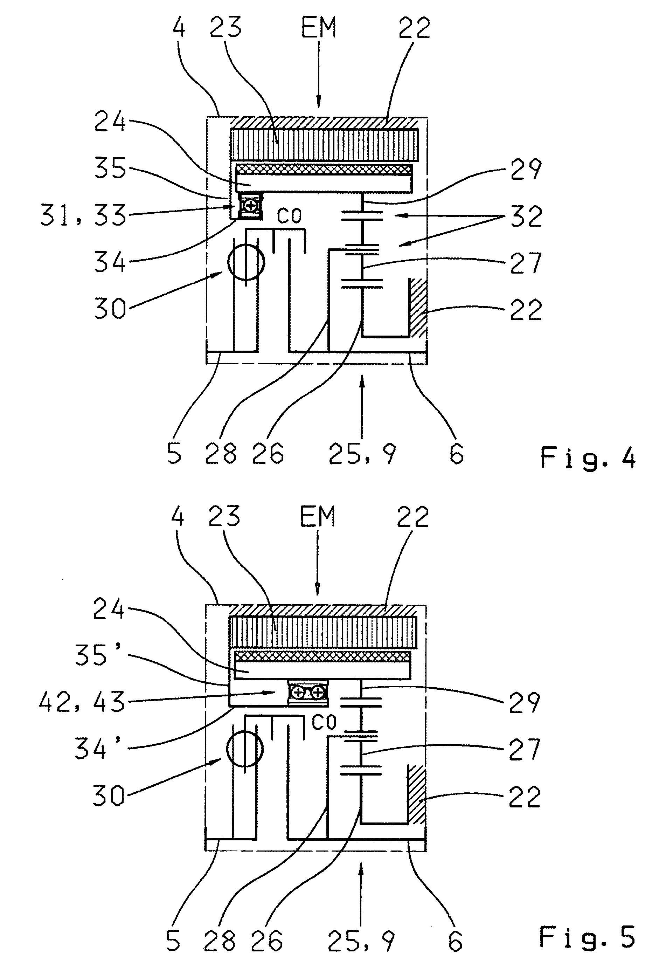

In der Variante des Hybridmoduls 4 nach Fig. 4 ist im Gegensatz zu den Ausführungsformen nach Fig. 2 und Fig. 3 für die Loslagerung 32 des Rotors 24 der Elektromaschine EM kein Wälzlager vorgesehen. Die Loslagerung 32 des Rotors 24 wird in diesem Fall durch die Verzahnungen und die Lagerungen der Bauteile 26, 27, 28, 29 der Eingangsgetriebestufe 25 gebildet. Die auftretenden Radialkräfte der Loslagerung 32 werden in diesem Fall im Wesentlichen über die Verzahnungen des Hohlrades 29 und der Planetenräder 27 in den Planetenträger 28 und von diesem über die Lagerung des Ausgangselementes 6 in das Modulgehäuse 22 übertragen.

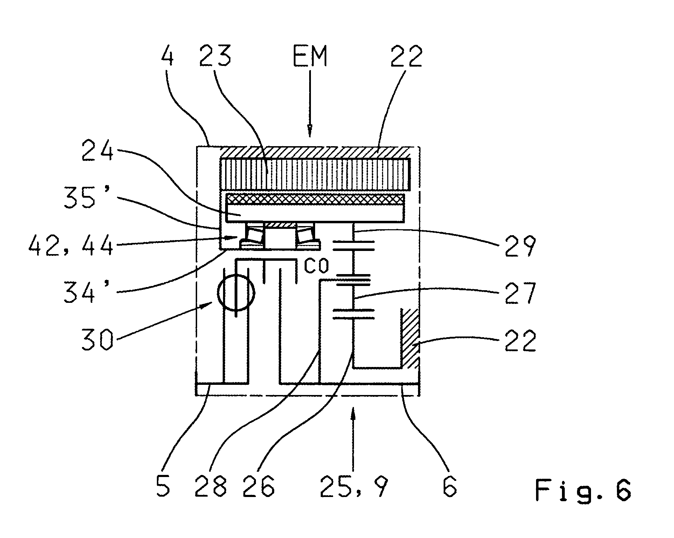

In den Varianten des Hybridmoduls 4 nach Fig. 5 und Fig. 6 ist der Rotor 24 der Elektromaschine EM jeweils über eine einzige, axial motorseitig der Eingangsgetriebestufe 25 angeordnete Festlagerung 42 gegenüber dem Modulgehäuse 22 drehbar gelagert. Die Festlagerung 42 des Rotors 24 ist jeweils durch eine Wälzlageranordnung 43, 44 gebildet, die sich radial innen auf einem außenzylindrischen Lagersitz 34' abstützt, der Bestandteil eines gehäusefesten Lagerschildes 35' ist.

Die Wälzlageranordnung ist in der Ausführungsform nach Fig. 5 als ein zweireihiges Schrägkugellager 43 und in der Variante nach Fig. 6 als eine angestellte Lagerung 44 von zwei Kegelrollenlagern ausgebildet. Von der Eingangsgetriebestufe 25 bzw. dem Hohlrad 29 des Planetenradsatzes 9 ausgehende Axialspannungen werden bei diesen Lagerungsausführungen durch eine Axialverschiebung des Hohlrades 29 und gegebenenfalls der Planetenräder 27 gegenüber dem Planetenträger 28 und/oder durch eine elastische Verformung des Rotors 24 der Elektromaschine EM ausgeglichen.

### Bezugszeichen

- 1: Automatgetriebe
- 2: Eingangswelle
- 3: Ausgangswelle
- 4: Hybridmodul
- 5: Eingangselement
- 6: Ausgangselement
- 7: Eingangsseitiges Teilgetriebe
- 8: Ausgangsseitiges Teilgetriebe
- 9: Einfacher Planetenradsatz
- 10: Getriebegehäuse
- 11: Sonnenrad
- 12: Planetenrad
- 13: Planetenträger
- 14: Hohlrad
- 15: Ravigneaux-Radsatz
- 16: Sonnenrad
- 17: Planetenrad
- 18: Sonnenrad
- 19: Planetenrad
- 20: Planetenträger
- 21: Hohlrad
- 22: Modulgehäuse
- 23: Stator
- 24: Rotor
- 25: Eingangsgetriebestufe
- 26: Sonnenrad
- 27: Planetenrad
- 28: Planetenträger
- 29: Hohlrad
- 30: Drehschwingungsdämpfer
- 31: Festlagerung
- 32: Loslagerung
- 33: Wälzlager, Rillenkugellager
- 34: Lagersitz
- 34': Lagersitz
- 35: Lagerschild
- 35': Lagerschild
- 36: Wälzlager, Rillenkugellager
- 36': Wälzlager, Rillenkugellager
- 37: Lagersitz
- 38: Lagersitz
- 39: Lagerscheibe
- 40: Abtriebselement
- 41: Hydraulikpumpe
- 42: Festlagerung
- 43: Wälzlageranordnung, zweireihiges Schrägkugellager
- 44: Wälzlageranordnung, angestellte Lagerung
- B1: Schaltbremse
- B2: Schaltbremse
- C0: Trennkupplung
- C1 - C3: Schaltkupplung
- EM: Elektromaschine
- G1 - G6: Vorwärts-Gangstufen
- i_{EK}: Übersetzung der Eingangsgetriebestufe
- R: Rückwärts-Gangstufe

## Patentansprüche

1. Hybridantriebsstrang eines Kraftfahrzeugs, der einen Verbrennungsmotor mit einer Triebwelle, eine als Motor und als Generator betreibbare Elektromaschine (EM) mit einem Stator (23) sowie einem Rotor (24), und ein mehrstufiges Planeten-Automatgetriebe (1) mit einer Eingangswelle (2) und einer Ausgangswelle (3) umfasst, wobei die Triebwelle des Verbrennungsmotors über eine steuerbare Trennkupplung (C0) und der Rotor (24) der Elektromaschine (EM) über eine Eingangsgetriebestufe (25) mit der Eingangswelle (2) des Automatgetriebes (1) in Triebverbindung stehen, wobei die Elektromaschine (EM), die Trennkupplung (C0) und die Eingangsgetriebestufe (25) in koaxialer Anordnung in einem vormontierbaren Hybridmodul (4) mit einem Modulgehäuse (22), einem Eingangselement (5) und einem Ausgangselement (6) zusammengefasst sind, wobei das Eingangselement (5) drehfest mit der Triebwelle des Verbrennungsmotors und das Ausgangselement (6) drehfest mit der Eingangswelle (2) des Automatgetriebes (1) verbunden sind, und das Hybridmodul (4) die Abmessungen eines konventionell verwendeten hydrodynamischen Drehmomentwandlers einhält, und der Rotor (24) der Elektromaschine (EM) über eine zweischnittige Lagerung, bestehend aus einer axial motorseitig der Eingangsgetriebestufe (25) angeordneten Festlagerung (31) und einer axial getriebeseitig der Eingangsgetriebestufe (25) angeordneten Loslagerung (32), gegenüber dem Modulgehäuse (22) und/oder einem in dem Modulgehäuse (22) drehbar gelagerten Bauteil (6, 40) drehbar gelagert ist, **dadurch gekennzeichnet, dass** die Festlagerung (31) des Rotors (24) durch ein Wälzlager (33) gebildet ist, das sich radial innen auf einem gehäusefesten außenzylindrischen Lagersitz (34) abstützt.

2. Hybridantriebsstrang eines Kraftfahrzeugs, der einen Verbrennungsmotor mit einer Triebwelle, eine als Motor und als Generator betreibbare Elektromaschine (EM) mit einem Stator (23) sowie einem Rotor (24), und ein mehrstufiges Planeten-Automatgetriebe (1) mit einer Eingangswelle (2) und einer Ausgangswelle (3) umfasst, wobei die Triebwelle des Verbrennungsmotors über eine steuerbare Trennkupplung (C0) und der Rotor (24) der Elektromaschine (EM) über eine Eingangsgetriebestufe (25) mit der Eingangswelle (2) des Automatgetriebes (1) in Triebverbindung stehen, wobei die Elektromaschine (EM), die Trennkupplung (C0) und die Eingangsgetriebestufe (25) in koaxialer Anordnung in einem vormontierbaren Hybridmodul (4) mit einem Modulgehäuse (22), einem Eingangselement (5) und einem Ausgangselement (6) zusammengefasst sind, wobei das Eingangselement (5) drehfest mit der Triebwelle des Verbrennungsmotors und das Ausgangselement (6) drehfest mit der Eingangswelle (2) des Automatgetriebes (1) verbunden sind, und das Hybridmodul (4) die Abmessungen eines konventionell verwendeten hydrodynamischen Drehmomentwandlers einhält, und der Rotor (24) der Elektromaschine (EM) über eine einzige, axial motorseitig der Eingangsgetriebestufe (25) angeordnete Festlagerung (42) gegenüber dem Modulgehäuse (22) oder einem in dem Modulgehäuse (22) drehbar gelagerten Bauteil drehbar gelagert ist, **dadurch gekennzeichnet, dass** die Festlagerung (42) des Rotors (24) durch eine Wälzlageranordnung (43, 44) gebildet ist, die sich radial innen auf einem gehäusefesten außenzylindrischen Lagersitz (34') abstützt.

3. Hybridantriebsstrang nach Anspruch 1 oder 2, **dadurch gekennzeichnet, dass** die Elektromaschine (EM) als ein Innenläufer mit einem radial innerhalb des Stators (23) angeordneten Rotor (24) ausgebildet ist, und dass die Trennkupplung (C0) axial motorseitig und die Eingangsgetriebestufe (25) axial getriebeseitig radial innerhalb des Rotors (24) angeordnet sind.

4. Hybridantriebsstrang nach einem der vorhergehenden Ansprüche, **dadurch gekennzeichnet, dass** das Eingangselement (5) des Hybridmoduls (4) aus zwei begrenzt zueinander verdrehbaren Teilen besteht, die über einen Drehschwingungsdämpfer (30) miteinander verbunden sind.

5. Hybridantriebsstrang nach einem der vorhergehenden Ansprüche, **dadurch gekennzeichnet, dass** die Eingangsgetriebestufe (25) eine Übersetzung i_{EK} zwischen 1,2 und 1,7 aufweist (1,2 < i_{EK} < 1,7).

6. Hybridantriebsstrang nach Anspruch 5, **dadurch gekennzeichnet, dass** die Eingangsgetriebestufe (25) als ein einfacher Planetenradsatz (9) mit einem Sonnenrad (26), mehreren auf einem Planetenträger (28) umfangsseitig verteilt angeordneten und drehbar gelagerten sowie mit dem Sonnenrad (26) in Verzahnungseingriff stehenden Planetenrädern (27), und einem mit den Planetenrädern (27) in Verzahnungseingriff stehenden Hohlrad (29) ausgebildet ist, wobei das Sonnenrad (26) gegenüber dem Modulgehäuse (22) arretiert ist, das Hohlrad (29) drehfest mit dem Rotor (24) der Elektromaschine (EM) verbunden ist, und der Planetenträger (28) drehfest mit dem Ausgangselement (6) des Hybridmoduls (4) verbunden ist.

7. Hybridantriebsstrang nach Anspruch 1 oder Anspruch 2 und einem der Ansprüche 3 bis 6, **dadurch gekennzeichnet, dass** die Loslagerung (32) des Rotors (24) durch ein Wälzlager (36) gebildet ist, das sich radial innen auf einem gehäusefesten außenzylindrischen Lagersitz (37) abstützt.

8. Hybridantriebsstrang nach Anspruch 1 oder Anspruch 2 und einem der Ansprüche 3 bis 6, **dadurch gekennzeichnet, dass** die Loslagerung (32) des Rotors (24) durch ein Wälzlager (36') gebildet ist, das sich radial innen auf einem außenzylindrischen Lagersitz (38) abstützt, der an einem mit dem Ausgangselement (6) des Hybridmoduls (4) drehfest verbundenen Bauteil (40) befestigt ist.

9. Hybridantriebsstrang nach Anspruch 1 oder Anspruch 2 und einem der Ansprüche 3 bis 8, **dadurch gekennzeichnet, dass** das die Festlagerung (31) und/oder die Loslagerung (32) des Rotors (24) bildende Wälzlager (33, 36, 36') als Rillenkugellager ausgebildet ist.

10. Hybridantriebsstrang nach Anspruch 1 oder Anspruch 2 und einem der Ansprüche 3 bis 6, **dadurch gekennzeichnet, dass** die Loslagerung (32) des Rotors (24) durch die Verzahnungen und die Lagerungen der Bauteile (26, 27, 28, 29) der Eingangsgetriebestufe (25) gebildet ist.

11. Hybridantriebsstrang nach Anspruch 1 oder Anspruch 2 und einem der Ansprüche 3 bis 6, **dadurch gekennzeichnet, dass** die Festlagerung (42) des Rotors (24) als ein zweireihiges Schrägkugellager (43) ausgebildet ist.

12. Hybridantriebsstrang nach Anspruch 1 oder Anspruch 2 und einem der Ansprüche 3 bis 6, **dadurch gekennzeichnet, dass** die Festlagerung (42) des Rotors (24) als eine angestellte Lagerung (44) von zwei Kegelrollenlagern ausgebildet ist.

## Claims

1. Hybrid drive train of a motor vehicle, which comprises an internal combustion engine with a drive shaft, an electric machine (EM) which can be operated as a motor and as a generator with a stator (23) and a rotor (24), and a multi-stage planetary automatic transmission (1) with an input shaft (2) and an output shaft (3), wherein the drive shaft of the internal combustion engine is in drive connection via a controllable separating clutch (C0) and the rotor (24) of the electric machine (EM) is in drive connection via an input transmission stage (25) to the input shaft (2) of the automatic transmission (1), wherein the electric machine (EM), the separating clutch (C0) and the input transmission stage (25) are combined in a coaxial arrangement in a premountable hybrid module (4) with a module housing (22), an input element (5) and an output element (6), wherein the input element (5) is connected in a rotationally conjoint manner to the drive shaft of the internal combustion engine and the output element (6) is connected in a rotationally conjoint manner to the input shaft (2) of the automatic transmission (1), and the hybrid module (4) adheres to the dimensions of a conventionally used hydrodynamic torque converter, and the rotor (24) of the electric machine (EM) is mounted rotatably via a double-shear bearing, comprising a fixed bearing (31) arranged axially on the motor side of the input transmission stage (25) and a floating bearing (32) arranged axially on the transmission side of the input transmission stage (25) with respect to the module housing (22) and/or a component (6, 40) mounted rotatably in the module housing (22), **characterized in that** the fixed bearing (31) of the rotor (24) is formed by an anti-friction bearing (33) which is supported radially on the inside on an outer-cylindrical bearing seat (34) which is fixed on the housing.

2. Hybrid drive train of a motor vehicle which comprises an internal combustion engine with a drive shaft, an electric machine (EM) which can be operated as a motor and as a generator with a stator (23) and a rotor (24), and a multi-stage planetary automatic transmission (1) with an input shaft (2) and an output shaft (3), wherein the drive shaft of the internal combustion engine is in drive connection via a controllable separating clutch (C0) and the rotor (24) of the electric machine (EM) is in drive connection via an input transmission stage (25) to the input shaft (2) of the automatic transmission (1), wherein the electric machine (EM), the separating clutch (C0) and the input transmission stage (25) are combined in a coaxial arrangement in a premountable hybrid module (4) with a module housing (22), an input element (5) and an output element (6), wherein the input element (5) is connected in a rotationally conjoint manner to the drive shaft of the internal combustion engine and the output element (6) is connected in a rotationally conjoint manner to the input shaft (2) of the automatic transmission (1), and the hybrid module (4) adheres to the dimensions of a conventionally used hydrodynamic torque converter, and the rotor (24) of the electric machine (EM) is mounted rotatably via a single fixed bearing (42) arranged axially on the motor side of the input transmission stage (25) with respect to the module housing (22) and/or a component mounted rotatably in the module housing (22), **characterized in that** the fixed bearing (42) of the rotor (24) is formed by an anti-friction bearing arrangement (43, 44) which is supported radially on the inside on an outer-cylindrical bearing seat (34') which is fixed on the housing.

3. Hybrid drive train according to Claim 1 or 2, **characterized in that** the electric machine (EM) is formed as an inner armature with a rotor (24) arranged radially within the stator (23) and that the separating clutch (C0) is arranged axially on the motor side and the input transmission stage (25) is arranged axially on the transmission side radially within the rotor (24).

4. Hybrid drive train according to one of the preceding claims, **characterized in that** the input element (5) of the hybrid module (4) comprises two parts which are rotatable to a limited extent with respect to one another and are connected to one another via a rotational vibration damper (30).

5. Hybrid drive train according to one of the preceding claims, **characterized in that** the input transmission stage (25) has a transmission ratio i_{EK} between 1.2 and 1.7 (1.2 < i_{EK} < 1.7).

6. Hybrid drive train according to Claim 5, **characterized in that** the input transmission stage (25) is formed as a single planetary wheel set (9) with a sun wheel (26), a plurality of planetary wheels (27) which are arranged distributed on the circumference on a planetary carrier (28) and are rotatably mounted and are in toothed engagement with the sun wheel (26), and an internal gear wheel (29) which is in toothed engagement with the planetary wheels (27), wherein the sun wheel (26) is locked with respect to the module housing (22), the internal gear wheel (29) is connected in a rotationally conjoint manner to the rotor (24) of the electric machine (EM), and the planetary carrier (28) is connected in a rotationally conjoint manner to the output element (6) of the hybrid module (4).

7. Hybrid drive train according to Claim 1 or Claim 2 and one of Claims 3 to 6, **characterized in that** the floating bearing (32) of the rotor (24) is formed by an anti-friction bearing (36) which is supported radially on the inside on an outer-cylindrical bearing seat (37) fixed on the housing.

8. Hybrid drive train according to Claim 1 or Claim 2 and one of Claims 3 to 6, **characterized in that** the floating bearing (32) of the rotor (24) is formed by an anti-friction bearing (36') which is supported radially on the inside on an outer-cylindrical bearing seat (38) which is fastened on a component (40) which is connected in a rotationally conjoint manner to the output element (6) of the hybrid module (4).

9. Hybrid drive train according to Claim 1 or Claim 2 and one of Claims 3 to 8, **characterized in that** the anti-friction bearing (33, 36, 36') which forms the fixed bearing (31) and/or the floating bearing (32) of the rotor (24) is formed as a grooved ball bearing.

10. Hybrid drive train according to Claim 1 or Claim 2 and one of Claims 3 to 6, **characterized in that** the floating bearing (32) of the rotor (24) is formed by the toothings and the bearings of the components (26, 27, 28, 29) of the input transmission stage (25).

11. Hybrid drive train according to Claim 1 or Claim 2 and one of Claims 3 to 6, **characterized in that** the fixed bearing (42) of the rotor (24) is formed as a two-row inclined ball bearing (43).

12. Hybrid drive train according to Claim 1 or Claim 2 and one of Claims 3 to 6, **characterized in that** the fixed bearing (42) of the rotor (24) is formed as an inclined bearing (44) by two tapered roller bearings.

## Revendications

1. Chaîne de propulsion hybride d'un véhicule automobile qui comprend un moteur à combustion interne avec un arbre d'entraînement, une machine électrique (EM) pouvant fonctionner en tant que moteur et en tant que générateur avec un stator (23) ainsi qu'un rotor (24), et une transmission automatique (1) à engrenages planétaires à plusieurs étages avec un arbre d'entrée (2) et un arbre de sortie (3), l'arbre d'entraînement du moteur à combustion interne étant en liaison d'entraînement par le biais d'un embrayage séparateur commandable (C0) et le rotor (24) de la machine électrique (EM) étant en liaison d'entraînement par le biais d'un étage de transmission d'entrée (25), avec l'arbre d'entrée (2) de la transmission automatique (1), la machine électrique (EM), l'embrayage séparateur (C0) et l'étage de transmission d'entrée (25) étant rassemblés suivant un agencement coaxial en un module hybride prémontable (4) avec un boîtier de module (22), un élément d'entrée (5) et un élément de sortie (6), l'élément d'entrée (5) étant connecté de manière solidaire en rotation à l'arbre d'entraînement du moteur à combustion interne et l'élément de sortie (6) étant connecté de manière solidaire en rotation à l'arbre d'entrée (2) de la transmission automatique (1), et le module hybride (4) incluant les dimensions d'un convertisseur de couple hydrodynamique utilisé de manière conventionnelle, et le rotor (24) de la machine électrique (EM), par le biais d'un support sur palier à double cisaillement, constitué d'un support sur palier fixe (31) disposé axialement du côté du moteur de l'étage de transmission d'entrée (25) et d'un support sur palier libre (32) disposé axialement du côté de la transmission de l'étage de transmission d'entrée (25), étant monté à rotation par rapport au boîtier de module (22) et/ou par rapport à un composant (6, 40) monté à rotation dans le boîtier de module (22), **caractérisée en ce que** le support sur palier fixe (31) du rotor (24) est formé par un palier à roulement (33) qui s'appuie radialement à l'intérieur sur un siège de palier (34) cylindrique extérieur fixé au boîtier.

2. Chaîne de propulsion hybride d'un véhicule automobile qui comprend un moteur à combustion interne avec un arbre d'entraînement, une machine électrique (EM) pouvant fonctionner en tant que moteur et en tant que générateur avec un stator (23) ainsi qu'un rotor (24), et une transmission automatique (1) à engrenages planétaires à plusieurs étages avec un arbre d'entrée (2) et un arbre de sortie (3), l'arbre d'entraînement du moteur à combustion interne étant en liaison d'entraînement par le biais d'un embrayage séparateur commandable (C0) et le rotor (24) de la machine électrique (EM) étant en liaison d'entraînement par le biais d'un étage de transmission d'entrée (25), avec l'arbre d'entrée (2) de la transmission automatique (1), la machine électrique (EM), l'embrayage séparateur (C0) et l'étage de transmission d'entrée (25) étant rassemblés suivant un agencement coaxial en un module hybride prémontable (4) avec un boîtier de module (22), un élément d'entrée (5) et un élément de sortie (6), l'élément d'entrée (5) étant connecté de manière solidaire en rotation à l'arbre d'entraînement du moteur à combustion interne et l'élément de sortie (6) étant connecté de manière solidaire en rotation à l'arbre d'entrée (2) de la transmission automatique (1), et le module hybride (4) incluant les dimensions d'un convertisseur de couple hydrodynamique utilisé de manière conventionnelle, et le rotor (24) de la machine électrique (EM), par le biais d'un support sur palier fixe (42) unique, disposé axialement du côté du moteur de l'étage de transmission d'entrée (25), étant monté à rotation par rapport au boîtier de module (22) ou par rapport à un composant monté à rotation dans le boîtier de module (22), **caractérisée en ce que** le support sur palier fixe (42) du rotor (24) est formé par un agencement de palier à roulement (43, 44) qui s'appuie radialement à l'intérieur sur un siège de palier (34') cylindrique extérieur fixé au boîtier.

3. Chaîne de propulsion hybride selon la revendication 1 ou 2, **caractérisée en ce que** la machine électrique (EM) est réalisée sous forme d'induit intérieur avec un rotor (24) disposé radialement à l'intérieur du stator (23), et **en ce que** l'embrayage séparateur (C0) est disposé axialement du côté du moteur et l'étage de transmission d'entrée (25) est disposé axialement du côté de la transmission radialement à l'intérieur du rotor (24).

4. Chaîne de propulsion hybride selon l'une quelconque des revendications précédentes, **caractérisée en ce que** l'élément d'entrée (5) du module hybride (4) se compose de deux parties pouvant tourner de manière limitée l'une par rapport à l'autre, lesquelles sont connectées l'une à l'autre par le biais d'un amortisseur d'oscillations (30).

5. Chaîne de propulsion hybride selon l'une quelconque des revendications précédentes, **caractérisée en ce que** l'étage de transmission d'entrée (25) présente un rapport de transmission i_{EK} compris entre 1,2 et 1,7 (1,2 < i_{EK} < 1,7) .

6. Chaîne de propulsion hybride selon la revendication 5, **caractérisée en ce que** l'étage de transmission d'entrée (25) est réalisé sous forme de train planétaire simple (9) avec une roue solaire (26), plusieurs pignons satellites (27) répartis du côté de la périphérie et montés à rotation sur un porte-satellites (28), et une couronne dentée (29) en engagement denté avec les pignons satellites (27), la roue solaire (26) étant bloquée par rapport au boîtier de module (22), la couronne dentée (29) étant connectée de manière solidaire en rotation au rotor (24) de la machine électrique (EM), et le porte-satellites (28) étant connecté de manière solidaire en rotation à l'élément de sortie (6) du module hybride (4).

7. Chaîne de propulsion hybride selon la revendication 1 ou la revendication 2 et selon l'une quelconque des revendications 3 à 6, **caractérisée en ce que** le support sur palier libre (32) du rotor (24) est formé par un palier à roulement (36) qui s'appuie radialement à l'intérieur sur un siège de palier (37) cylindrique extérieur fixé au boîtier.

8. Chaîne de propulsion hybride selon la revendication 1 ou selon la revendication 2 et selon l'une quelconque des revendications 3 à 6, **caractérisée en ce que** le support sur palier libre (32) du rotor (24) est formé par un palier à roulement (36') qui s'appuie radialement à l'intérieur sur un siège de palier (38) cylindrique extérieur qui est fixé au niveau d'un composant (40) connecté de manière solidaire en rotation à l'élément de sortie (6) du module hybride (4).

9. Chaîne de propulsion hybride selon la revendication 1 ou la revendication 2 et selon l'une quelconque des revendications 3 à 8, **caractérisée en ce que** le palier à roulement (33, 36, 36') formant le support sur palier fixe (31) et/ou le support sur palier libre (32) du rotor (24) est réalisé sous forme de roulement rainuré à billes.

10. Chaîne de propulsion hybride selon la revendication 1 ou la revendication 2 et selon l'une quelconque des revendications 3 à 6, **caractérisée en ce que** le support sur palier libre (32) du rotor (24) est formé par les dentures et les supports sur palier des composants (26, 27, 28, 29) de l'étage de transmission d'entrée (25).

11. Chaîne de propulsion hybride selon la revendication 1 ou la revendication 2 et selon l'une quelconque des revendications 3 à 6, **caractérisée en ce que** le support sur palier fixe (42) du rotor (24) est réalisé sous forme de roulement à billes à contact oblique à deux rangées (43).

12. Chaîne de propulsion hybride selon la revendication 1 ou la revendication 2 et selon l'une quelconque des revendications 3 à 6, **caractérisée en ce que** le support sur palier fixe (42) du rotor (24) est réalisé sous forme de support sur palier incliné (44) constitué par deux roulements à rouleaux coniques.
